# EUROPEAN PATENT APPLICATION

(11) **EP 4 585 750 A1**
(43) Date of publication of application: **16.07.2025**
(21) Application number: 23900077.1
(22) Date of filing: 08.12.2023
(51) Int. Cl.: E01H 1/08

(54) **HAIR DRYER**

(30) Priority: 09.12.2022 CN 202211582920
(71) Applicant: Nanjing Chervon Industry Co., Ltd., Nanjing, Jiangsu 211106 (CN)
(72) Inventor: LI, Jingwei, Nanjing, Jiangsu 211106 (CN); ZHAN, Rui, Nanjing, Jiangsu 211106 (CN)
(74) Representative: Sun, Yiming
(86) International application number: PCT/CN2023/137337
(87) International publication number: WO 2024/120508

(57) **Abstract**

Provided is a blower. The blower includes a housing and a fan assembly. The housing is formed with an air inlet and an air outlet, and the airflow flows in from the air inlet and flows out from the air outlet. The fan assembly includes at least a first fan and a second fan. In a working mode of the blower, the first fan and the second fan rotate in opposite directions. The blower is provided with at least the first fan and the second fan. On the one hand, the airflow velocities are superimposed so that the speed at which the airflow flows out from the air outlet is increased, thereby satisfying the user's requirements for a high wind speed. On the other hand, the first fan and the second fan rotate in opposite directions so that the second fan can absorb the radial component of the force exerted by the first fan on the airflow, thereby converting the radial component of the force into useful work for the second fan; and the airflow moves axially after passing through the second fan. In addition, the two fans are provided to increase the speed at which the airflow flows out from the air outlet, thereby satisfying the user's requirements for a high wind speed.

## Description

This application claims priority to Chinese Patent Application No. 202211582920.X filed with the China National Intellectual Property Administration (CNIPA) on Dec. 9, 2022, the disclosure of which is incorporated herein by reference in its entirety.

### TECHNICAL FIELD

The present application relates to the technical field of garden tools and, in particular, to a blower.

### BACKGROUND

A blower is a conventional garden tool, which is mainly used for blowing away debris such as fallen leaves, road dust, accumulated water, and snow. The blower basically uses a single wind blade, and due to the characteristics of an axial flow fan, the blower cannot generate a higher wind speed and thus cannot satisfy the user's requirements for a high wind speed. In addition, the guide vane for guiding the airflow causes a certain amount of energy loss and wastes energy.

Therefore, there is an urgent need to provide a blower to solve the problem that the wind speed of the blower is lower.

### SUMMARY

An object of the present application is to provide a blower to increase the wind speed of the blower and reduce the efficiency loss caused by guide vanes.

To achieve the object, the present application adopts the technical solutions below.

The present application provides a blower. The blower includes a housing formed with an air inlet and an air outlet, where the airflow flows in from the air inlet and flows out from the air outlet; and a fan assembly including at least a first fan and a second fan. In a working mode of the blower, the first fan and the second fan rotate in opposite directions.

In an example, the first fan and the second fan are both capable of generating the airflow flowing from the air inlet to the air outlet.

In an example, the blower further includes a first motor, where the first fan and the second fan are both driven by the first motor.

In an example, the first motor is located on the same side of the first fan and the second fan.

In an example, the first motor is located between the first fan and the second fan.

In an example, the blower further includes a first motor and a second motor, where the first fan is driven by the first motor, and the second fan is driven by the second motor.

In an example, the first fan and the second fan are located between the first motor and the second motor.

In an example, the first fan and the second fan are located on a side of the first motor and a side of the second motor, respectively.

In an example, the first fan and the second fan are located on two sides of the first motor and the second motor.

In an example, the rotational speed of the first fan is the first rotational speed n1, the rotational speed of the second fan is the second rotational speed n2, and the ratio n1/n2 of the first rotational speed n1 to the second rotational speed n2 is greater than or equal to 0.2 and less than or equal to 5.

In an example, the power of the first fan is the first power P1, the power of the second fan is the second power P2, and the ratio P1/P2 of the first power P1 to the second power P2 is greater than or equal to 0.5 and less than or equal to 2.

In an example, the chord length of the first fan is the first chord length L1, the chord length of the second fan is the second chord length L2, and the ratio L1/L2 of the first chord length L1 to the second chord length L2 is greater than or equal to 0.65 and less than or equal to 1.

In an example, the outlet angle of the fan blade of the first fan is basically equal to the inlet angle of the fan blade of the second fan.

In an example, the blower further includes a drive shaft, where the drive shaft is driven by the first motor to rotate, and the first fan is driven by the drive shaft to rotate in a direction of rotation the same as the direction of rotation of the drive shaft.

In an example, the blower further includes a reversing assembly, where the drive shaft is connected to the reversing assembly, and the reversing assembly drives the second fan to rotate.

In an example, the reversing assembly includes a first gear, a second gear, and a third gear, and the second gear is located between the first gear and the third gear.

The present application has the effects below.

The present application provides a blower. The blower is provided with the first fan and the second fan, and the first fan and the second fan rotate in opposite directions so that the second fan can absorb the radial component of the force exerted by the first fan on the airflow, thereby converting the radial component of the force into useful work for the second fan. In this manner, the efficiency loss caused by guide vanes can be reduced, and after the airflow passes through the second fan, the direction of the airflow is adjusted so that the airflow moves axially. In addition, in this solution, the speed at which the airflow flows out from the air outlet is increased, thereby satisfying the user's requirements for a high wind speed.

### BRIEF DESCRIPTION OF DRAWINGS

FIG. 1 is a view illustrating the structure of a blower in example one of the present application.
FIG. 2 is a view illustrating the internal structure of a blower in example one of the present application.
FIG. 3 is a schematic view of a transmission structure of a blower in example one of the present application from a first perspective.
FIG. 4 is a schematic view of a transmission structure of a blower in example one of the present application from a second perspective.
FIG. 5 is a schematic view of a transmission structure of a blower with a first fan removed in example one of the present application.
FIG. 6 is a view illustrating the internal structure of a blower in example two of the present application.
FIG. 7 is a structural view of a transmission structure of a blower in example two of the present application.
FIG. 8 is a diagram illustrating the interior of a blower in example three of the present application.
FIG. 9 is a diagram illustrating the interior of a blower in example four of the present application.
FIG. 10 is a perspective view illustrating that the airflow flows through a first fan and a second fan in the present application.
FIG. 11 is a plan view illustrating that the airflow flows through a first fan and a second fan in the present application.
FIG. 12 is a sectional view illustrating the internal structure of a blower in example five of the present application.
FIG. 13 is an exploded view of a blower in example five of the present application from one perspective.
FIG. 14 is an exploded view of a blower in example five of the present application from another perspective.
FIG. 15 is a schematic view of a fan assembly and a drive assembly of a blower in example five of the present application.
FIG. 16 is an exploded view of some structures in FIG. 15 from one perspective.
FIG. 17 is an exploded view of some structures in FIG. 15 from another perspective.
FIG. 18 is an exploded view of the structures in FIG. 16 that are further disassembled.
FIG. 19 is an exploded view of the structures in FIG. 17 that are further disassembled.
FIG. 20 is a sectional view of a blower in example six of the present application.
FIG. 21 is a view illustrating the interior of a blower in example six of the present application.
FIG. 22 is an exploded view of the structure in FIG. 21.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

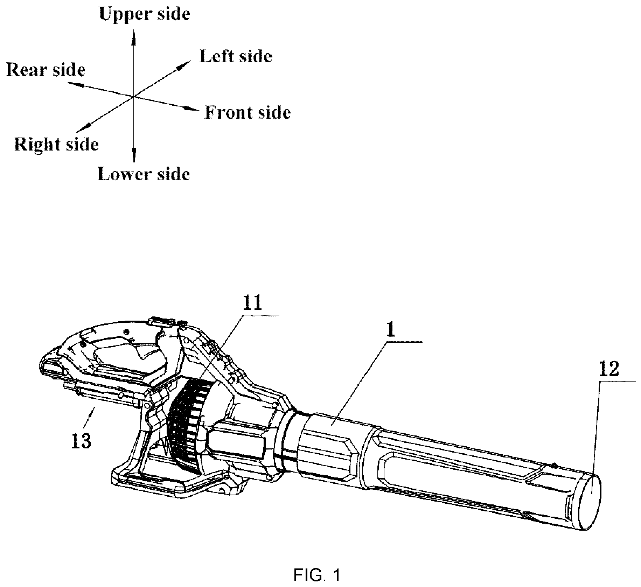

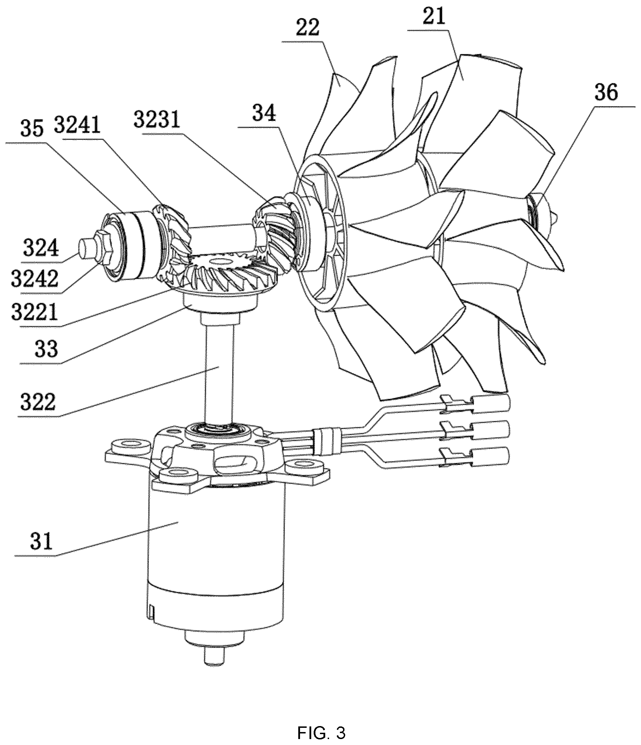

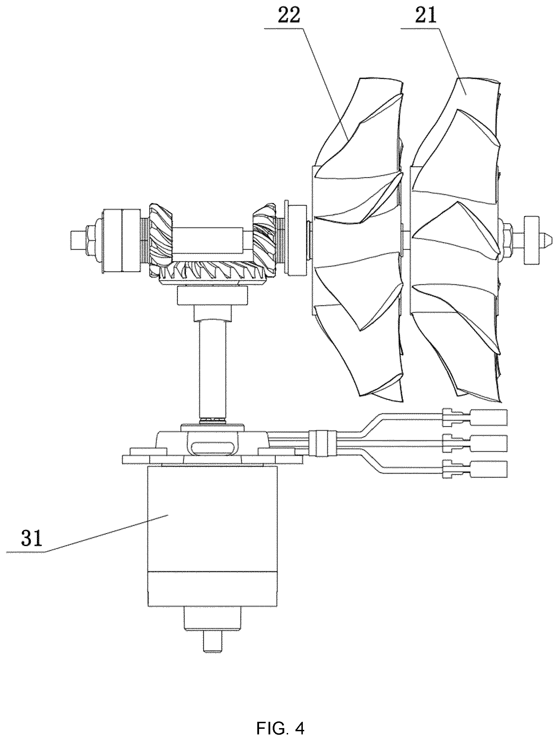

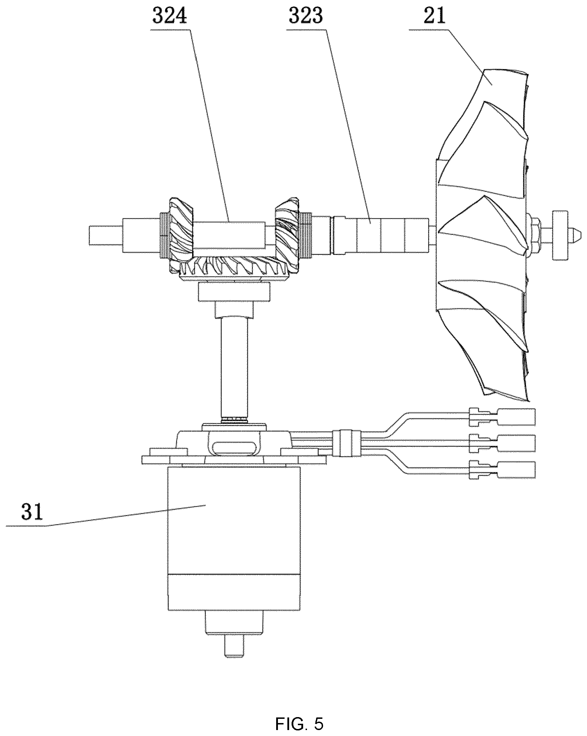

As shown in FIGS. 1 to 5, the present application provides a blower. The blower includes a housing 1 and a fan assembly 2. The housing 1 is formed with an air inlet 11 and an air outlet 12, and the airflow flows in from the air inlet 11 and flows out from the air outlet 12. The fan assembly 2 includes at least a first fan 21 and a second fan 22. In a working mode of the blower, the first fan 21 and the second fan 22 rotate in opposite directions.

The blower is provided with the first fan 21 and the second fan 22, and the first fan 21 and the second fan 22 rotate in opposite directions so that the second fan 22 can absorb the radial component of the force exerted by the first fan 21 on the airflow, thereby converting the radial component of the force into useful work for the second fan 22. In this manner, the efficiency loss caused by guide vanes can be reduced, and after the airflow passes through the second fan 22, the direction of the airflow is adjusted so that the airflow moves axially. In addition, in this solution, the speed at which the airflow flows out from the air outlet 12 is increased, thereby satisfying the user's requirements for a high wind speed.

To maximize the effect of each fan on the airflow velocity, in this example, the first fan 21 and the second fan 22 can both generate the airflow flowing from the air inlet 11 to the air outlet 12. Specifically, the first fan 21 and the second fan 22 each have an air inlet side and an air outlet side. The air inlet sides of the two fans are in the same direction and both face the air inlet 11, and the air outlet sides of the two fans are in the same direction and both face the air outlet 12. In an example, the first fan 21 and the second fan 22 are coaxially arranged. The first fan 21 and the second fan 22 that are coaxially arranged can achieve the superposition of airflow velocities.

Specifically, the blower has a first working mode. In the first working mode, the first fan 21 and the second fan 22 rotate in opposite directions. In addition to the first working mode, the blower may also have other working modes. In an example, the blower may have a second working mode. In the second working mode, the first fan 21 and the second fan 22 rotate in the same direction. In an example, the blower may have a third working mode. In the third working mode, only one of the first fan 21 and the second fan 22 rotates, and the other one of the first fan 21 and the second fan 22 remains stationary. The first working mode can achieve an increase in wind speed, the second working mode can achieve an increase in air volume, and the third working mode can save energy. In this manner, the blower can be switched between different working modes to satisfy different requirements of users.

Of course, in other examples, the fan assembly 2 may further include a third fan. When in operation, the third fan and the first fan 21 rotate in the same direction or rotate in opposite directions, and when in operation, the third fan can generate the airflow flowing from the air inlet 11 to the air outlet 12, thereby further increasing the airflow velocity.

In another example, the fan assembly 2 may further include a fourth fan. In a first implementation manner of this example, among the four fans, every two fans form a group. In a working mode of the blower, the two fans in the same group rotate in different directions. In a second implementation manner of this example, among the four fans, every two fans form a group. When in operation, the two fans in the same group rotate in the same direction, and the fans in different groups rotate in different directions.

In another example, the fan assembly 2 may further include five or more fans. In a first implementation manner of this example, at least two fans may be defined as a group, and the fans in the same group rotate in different directions. In a second implementation manner of this example, at least two fans may be defined as a group, the fans in the same group rotate in the same direction, and the fans in any two adjacent groups rotate in different directions.

For the driving principle of the fan, for ease of description, the case where the fan assembly 2 includes only the first fan 21 and the second fan 22 is used as an example for the description below.

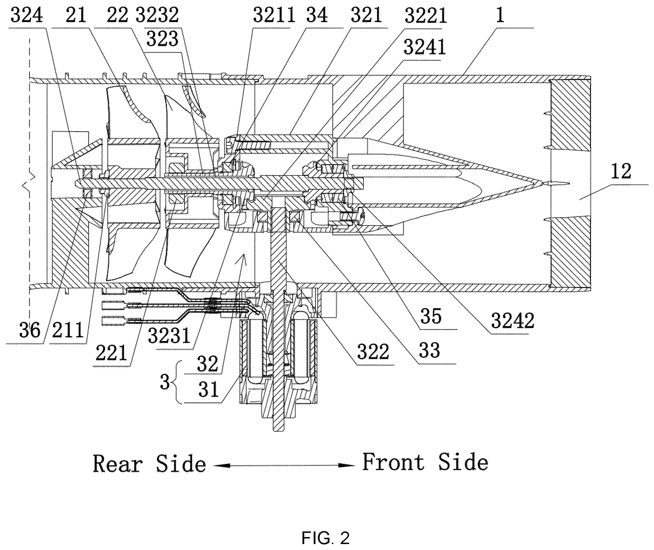

As shown in FIGS. 2 to 4, in an example, the blower further includes a first motor 31, and the first fan 21 and the second fan 22 are both driven by the first motor 31. The first fan 21 and the second fan 22 are driven by the same motor so that the blower has low energy consumption, light weight, and low costs. Specifically, the blower includes a drive assembly 3. The drive assembly 3 includes a transmission assembly 32 and the first motor 31 connected to the housing 1. The transmission assembly 32 includes a driving input end and two driving output ends drivingly connected to the driving input end. An output end of the first motor 31 is drivingly connected to the driving input end, the first fan 21 is drivingly connected to one driving output end, and the second fan 22 is drivingly connected to the other driving output end.

As shown in FIG. 2, in this example, the first motor 31 is located on the same side of the first fan 21 and the second fan 22. In other words, in the direction from the air inlet 11 to the air outlet 12, the first fan 21 is located between the second fan 22 and the first motor 31, or the second fan 22 is located between the first fan 21 and the first motor 31. In an example, the second fan 22 is located between the first fan 21 and the first motor 31, the first fan 21 is adjacent to the air inlet 11, and the first motor 31 is adjacent to the air outlet 12. This position layout makes the distance between the first fan 21 and the second fan 22 smaller, and the airflow from the second fan 22 incurs less loss before reaching the first fan 21.

In another example, the first motor 31 is located between the first fan 21 and the second fan 22. This arrangement is conducive to achieving the installation and transmission of the first fan 21 and the second fan 22, and the structure is relatively simple and easy to produce.

The structure of the transmission assembly 32 needs to be reasonably set according to the relative positions between the first motor 31, the first fan 21, and the second fan 22. The example in which the second fan 22 is located between the first motor 31 and the first fan 21 is described. In this example, the transmission assembly 32 includes a box body 321, a drive shaft 322, a first driven shaft 324, and a second driven shaft 323. The box body 321 is disposed in the housing 1, the drive shaft 322 is rotatably disposed in the box body 321, and an end of the drive shaft 322 located outside the box body 321 is drivingly connected to the first motor 31. The first driven shaft 324 is rotatably connected to the box body 321, an end of the first driven shaft 324 located in the box body 321 is drivingly connected to an end of the drive shaft 322 located in the box body 321, and an end of the first driven shaft 324 located outside the box body 321 is connected to the first fan 21. The second driven shaft 323 is rotatably disposed in the box body 321, an end of the second driven shaft 323 located in the box body 321 is drivingly connected to an end of the drive shaft 322 located in the box body 321, and an end of the second driven shaft 323 located outside the box body 321 is connected to the second fan 22.

In the example where the first fan 21 and the second fan 22 are coaxially arranged, the second driven shaft 323 has a penetrating avoidance passage 3232, and the first driven shaft 324 is connected to the second fan 22 after passing through the avoidance passage 3232. The avoidance passage 3232 can avoid the first driven shaft 324 so that the first driven shaft 324 can rotate coaxially with the second driven shaft 323, thereby greatly reducing the outer diameter of the blower and further improving the wind speed.

The first fan 21 is provided with a first fixing hole. The first driven shaft 324 is a stepped shaft. The first driven shaft 324 passes through the first fixing hole and is fixed by a first fixing member 211. The first fixing member 211 includes a nut, the first driven shaft 324 is provided with a stud, and the nut and the stud are screwed together to lock the first fan 21 between the nut and the step of the first driven shaft 324.

The second fan 22 is provided with a second fixing hole. The second driven shaft 323 is a stepped shaft. The second driven shaft 323 passes through the second fixing hole and is fixed by a second fixing member 221. The second fixing member 221 includes a nut, the second driven shaft 323 is provided with a stud, and the nut and the stud are screwed together to lock the second fan 22 between the nut and the step of the second driven shaft 323.

In this example, the transmission assembly 32 includes the box body 321 and an end cover 3211. The box body 321 is provided with an opening. The end cover 3211 is disposed at the opening of the box body 321, and the end cover 3211 and the box body 321 surround a mounting cavity. A drive gear 3221, a first driven gear 3241, and a second driven gear 3231 are all located in the mounting cavity, the drive gear 3221 is connected to the drive shaft 322, the first driven gear 3241 is connected to the first driven shaft 324, and the second driven gear 3231 is connected to the second driven shaft 323. The first driven gear 3241 and the second driven gear 3231 both mesh with the drive gear 3221.

The box body 321 is provided with a first mounting hole, the drive shaft 322 penetrates the first mounting hole, and a first bearing 33 is provided between the drive shaft 322 and the sidewall of the first mounting hole. The box body 321 is provided with a second mounting hole, the end cover 3211 is provided with a third mounting hole, and the second mounting hole and the third mounting hole are coaxially arranged. The second driven shaft 323 penetrates the third mounting hole, and a second bearing 34 is provided between the second driven shaft 323 and the sidewall of the third mounting hole. An end of the first driven shaft 324 penetrates the second mounting hole, and a third bearing 35 is provided between the first driven shaft 324 and the sidewall of the second mounting hole. A fourth mounting hole is provided in the housing 1, the other end of the first driven shaft 324 passes through the avoidance passage 3232 and then penetrates the fourth mounting hole, and a fourth bearing 36 is provided between the first driven shaft 324 and the sidewall of the fourth mounting hole. The fourth bearing 36 and the third bearing 35 are spaced apart and are located at two ends of the first driven shaft 324, respectively, thereby supporting the first driven shaft 324 and ensuring the stable rotation of the first driven shaft 324.

To improve the fixation of the first driven shaft 324 and prevent the first driven shaft 324 from moving axially, in this example, the drive assembly 3 further includes a third fixing member 3242. An end of the first driven shaft 324 is connected to the third fixing member 3242 after passing through the second mounting hole. The outer diameter of the third fixing member 3242 is greater than the inner diameter of the inner race of the third bearing 35, thereby preventing the first driven shaft 324 from moving backward. A part of the first driven shaft 324 located in the mounting cavity is provided with a step, an end of the first driven gear 3241 abuts against the step, and the other end of the first driven gear 3241 abuts against the inner race of the third bearing 35, thereby preventing the first driven shaft 324 from moving forward.

A battery pack coupling portion 13 is disposed at an end of the housing 1 facing the air inlet 11 and used for placing a battery pack, and the battery pack is used for supplying power to the first motor 31.

The rotational speed of the first fan 21 is the first rotational speed n1, the rotational speed of the second fan 22 is the second rotational speed n2, and the ratio n1/n2 of the first rotational speed n1 to the second rotational speed n2 is greater than or equal to 0.2 and less than or equal to 5. In an example, the ratio of the rotational speeds of the two fans is greater than or equal to 0.5 and less than or equal to 1. Under the premise of achieving airflow acceleration, this arrangement can avoid pressure accumulation between the first fan 21 and the second fan 22 and improve airflow stability. It is to be noted that the rotational speeds here refer to the rotational speeds when the two fans operate stably. That is to say, when the first fan 21 and the second fan 22 do not operate stably and the rotational speeds fluctuate greatly, the instantaneous rotational speeds of the two fans are not compared. This unstable operating state may include: sudden acceleration when the electric motor is just started, sudden changes in rotational speed caused by the acceleration and deceleration operations of the user, rotational speed reduction caused by the normal braking of the electric motor, the abnormal braking of the electric motor caused by an unexpected power failure, and the like.

The power of the first fan 21 is the first power P1, the power of the second fan 22 is the second power P2, and the ratio P1/P2 of the first power P1 to the second power P2 is greater than or equal to 0.5 and less than or equal to 2. It is to be noted that the power here refers to the power outputted to the fan by the electric motor that drives the fan to rotate. That is to say, the first power P1 refers to the power outputted to the first fan 21 by the electric motor that drives the first fan 21 to rotate, and the second power P2 refers to the power outputted to the second fan 22 by the electric motor that drives the second fan 22 to rotate. When the first fan 21 and the second fan 22 share the same electric motor, the first power P1 and the second power P2 are outputted by the same electric motor; and when the first fan 21 and the second fan 22 use two different electric motors, the first power P1 and the second power P2 are outputted by different electric motors.

The ratio L1/L2 of the chord length of the first fan 21 to the chord length of the second fan 22 is greater than or equal to 0.65 and less than or equal to 1. In an example, the ratio L1/L2 of the chord length of the first fan 21 to the chord length of the second fan 22 is 3/4. The chord lengths here refer to the chord lengths of the blades of the first fan 21 and the second fan 22. The definition of the chord length is common knowledge in the art and the details are not repeated here.

In this example, the outlet angle of the fan blade of the first fan 21 is basically equal to the inlet angle of the fan blade of the second fan 22. In this manner, the angle at which the airflow flows out from the first fan 21 is basically equal to the inlet angle of the fan blade of the second fan 22, which is greatly conducive to increasing the wind speed. The inlet angle and outlet angle of the fan blade described here are also common knowledge in the art and the details are not repeated here.

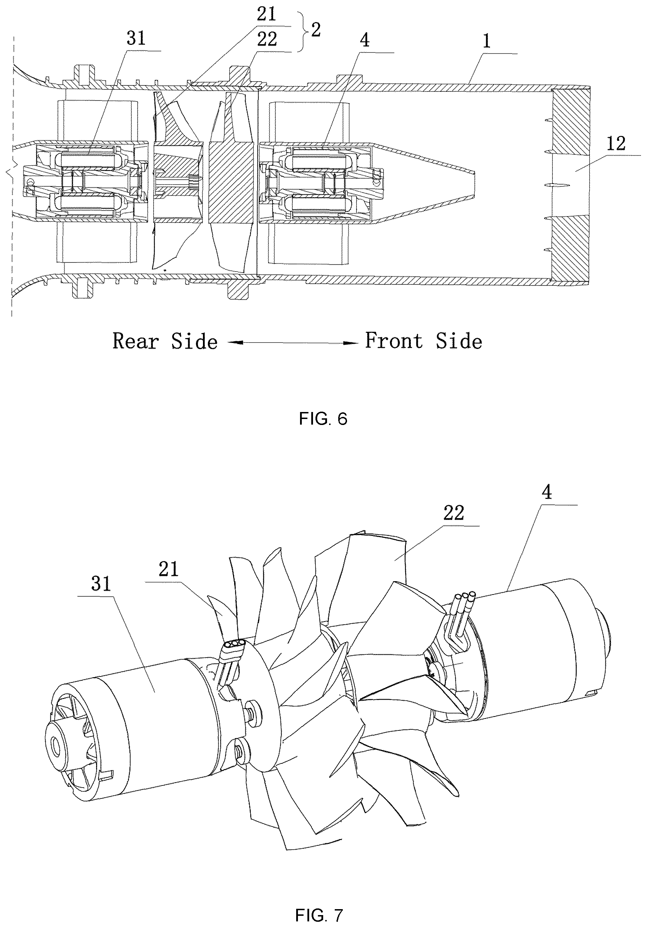

As shown in FIGS. 6 and 7, in an example, the structure is basically the same as the structure in the example disclosed in FIGS. 2 to 5. The difference lies in the drive mode of the first fan 21 and the second fan 22. Specifically, the blower further includes the first motor 31 and a second motor 4, the first fan 21 is driven by the first motor 31, and the second fan 22 is driven by the second motor 4. The preceding structure facilitates the control of the rotational speeds of the first fan 21 and the second fan 22.

For the positions of the first fan 21 and the second fan 22, in this example, the first fan 21 and the second fan 22 are located between the first motor 31 and the second motor 4, thereby reducing the air volume loss caused by the distance between the two fans.

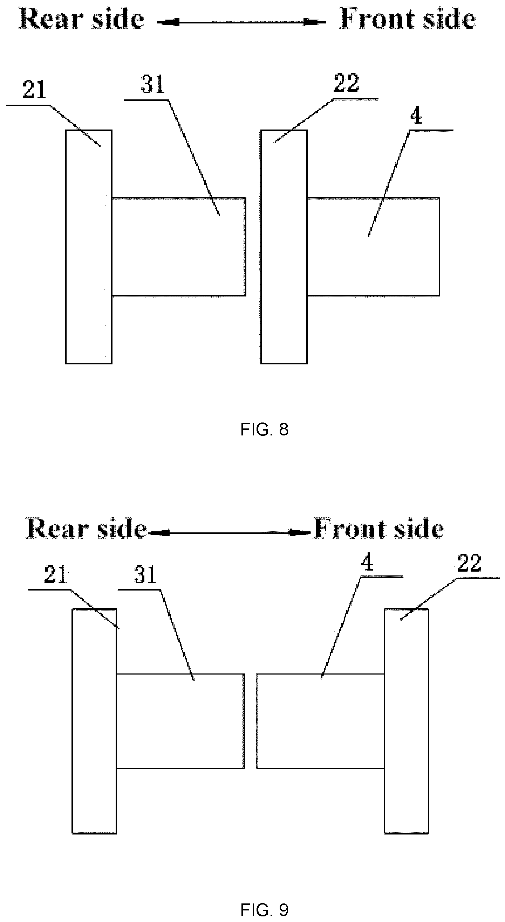

As shown in FIG. 8, the first fan 21 and the second fan 22 are located on a side of the first motor 31 and a side of the second motor 4, respectively. Specifically, in an example, in the direction from the air inlet 11 to the air outlet 12, the first fan 21, the first motor 31, the second fan 22, and the second motor 32 are arranged in sequence. In another example, in the direction from the air inlet 11 to the air outlet 12, the first motor 31, the first fan 21, the second motor 32, and the second fan 22 are arranged in sequence.

As shown in FIG. 9, the first fan 21 and the second fan 22 are located on two sides of the first motor 31 and the second motor 4. Specifically, in the direction from the air inlet 11 to the air outlet 12, the first fan 21, the first motor 31, the second motor 32, and the second fan 22 are arranged in sequence.

The battery pack coupling portion 13 is disposed at an end of the housing 1 facing the air inlet 11 and used for placing a battery pack, and the battery pack is used for supplying power to the first motor 31 and the second motor 4.

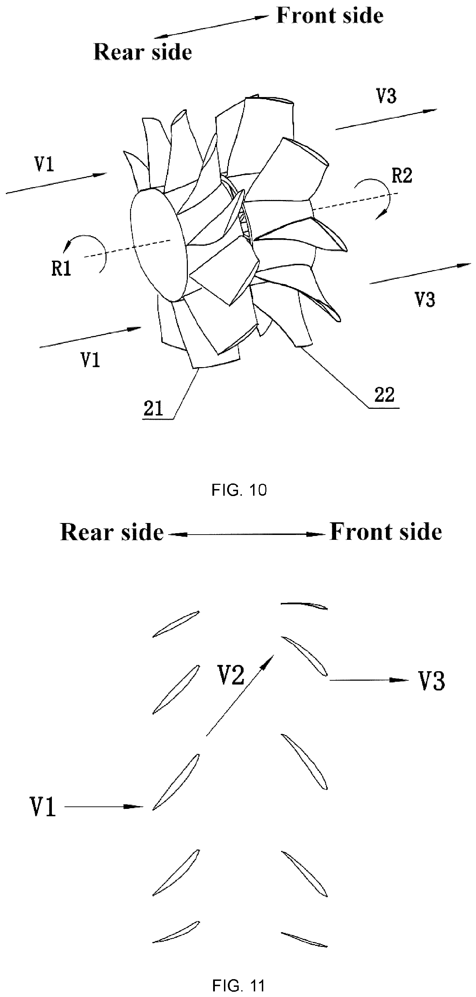

FIGS. 10 and 11 are schematic views illustrating that the airflow flows in from the air inlet 11 and flows out from the air outlet 12. The inlet angle of one of the first fan 21 and the second fan 22 is equal to the outlet angle of the other one of the first fan 21 and the second fan 22. Specifically, the airflow flows from the air inlet 11 to the first fan 21 in the direction V1, the direction of the airflow is adjusted to the direction V2 after the airflow passes through the first fan 21 with a direction of rotation R1, the airflow flows to the second fan 22 in the direction V2, the direction of the airflow is adjusted to the direction V3 after the airflow passes through the second fan 22 with a direction of rotation R2, and the airflow flows to the air outlet 12 in the direction V3. The direction of rotation R1 and the direction of rotation R2 are opposite.

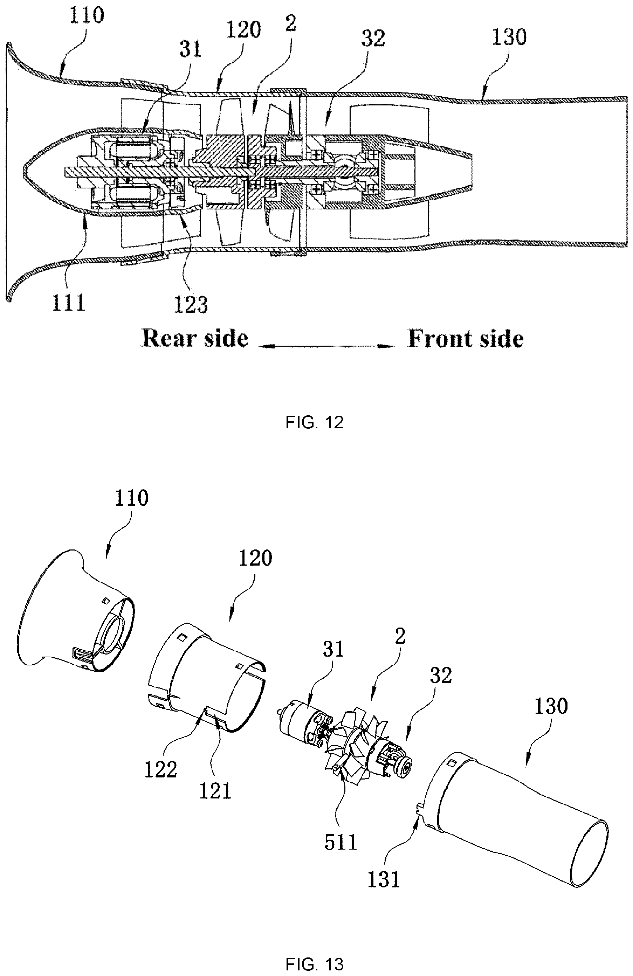

FIGS. 12 to 19 show a new example of the internal structure of the blower. As shown in FIGS. 12 to 14, the housing 1 includes a first housing 110, a second housing 120, and a third housing 130 that are connected in sequence. The first housing 110 is an air inlet housing of the blower. The airflow flows in from an opening end of the first housing 110, flows through the second housing 120, and flows out from an opening end of the third housing 130. The fan assembly 2 and the drive assembly 3 are disposed in the housing 1, and the drive assembly 3 includes the first motor 31 and the transmission assembly 32.

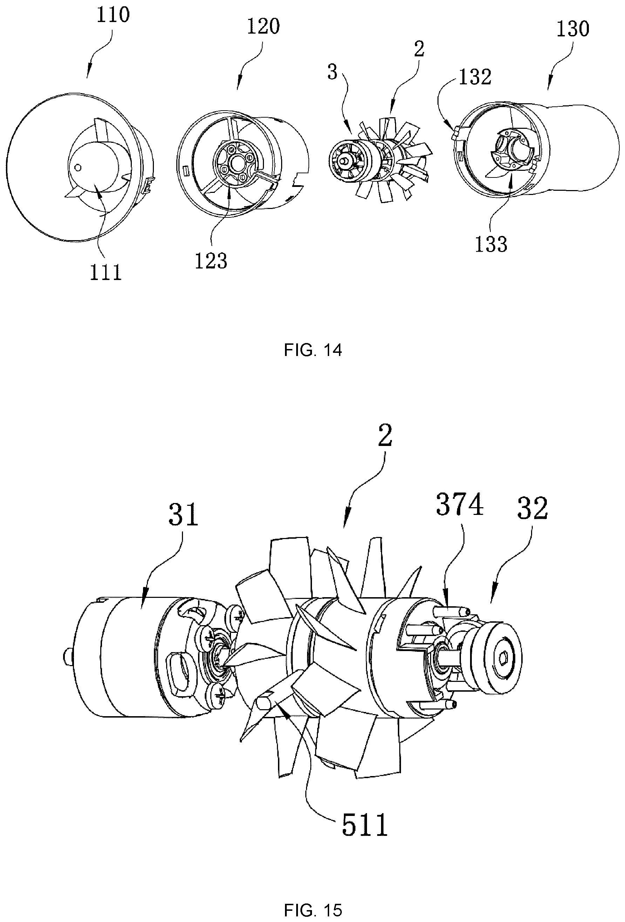

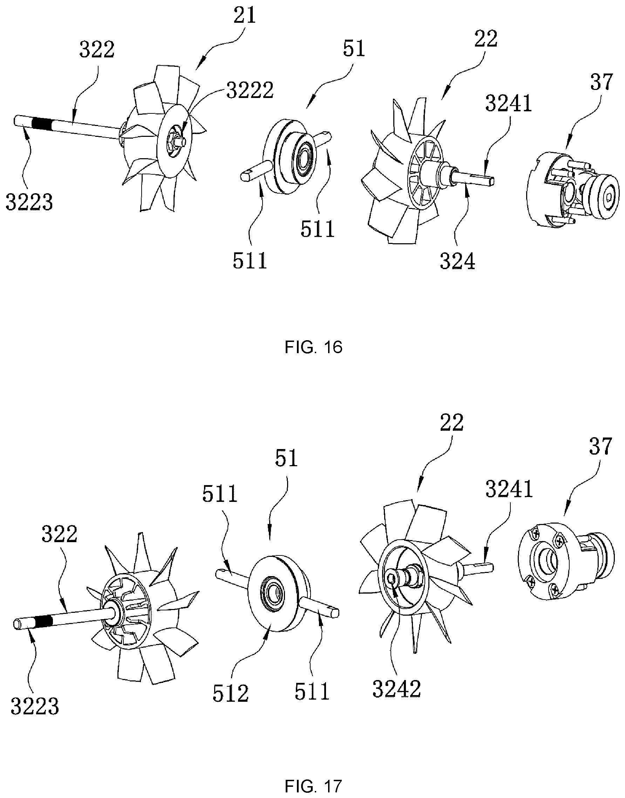

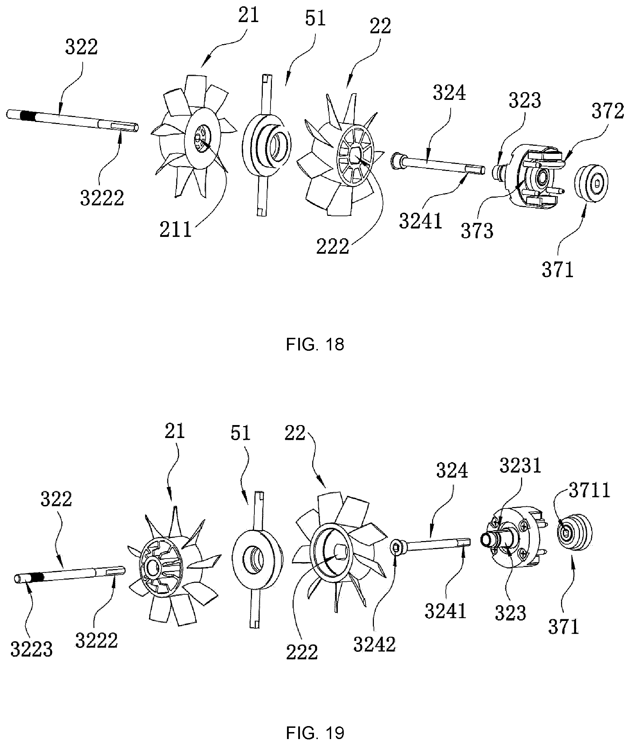

FIG. 15 is a schematic view of the fan assembly 2 and the drive assembly 3, FIGS. 16 and 17 are exploded views of the structures in FIG. 15 from two perspectives, and FIGS. 18 and 19 are exploded views of the structures in FIGS. 17 and 18 that are further disassembled.

As shown in FIGS. 15 to 19, the transmission assembly 32 includes the drive shaft 322, the first driven shaft 324, and the second driven shaft 323, and a reversing assembly 37 is disposed on the outer side of the first fan 21 and the second fan 22. The drive shaft 322 is connected to the first motor 31, and the first motor 31 rotates to drive the drive shaft 322 to rotate. The drive shaft 322 rotates to simultaneously drive the first fan 21 and the second fan 22 to rotate in opposite directions. The drive shaft 322 drives the first driven shaft 324 to rotate, and the first driven shaft 324 drives the reversing assembly 37 to move so that the reversing assembly 37 outputs rotation in a direction opposite to the direction of rotation of the drive shaft 322. The reversing assembly 37 is connected to the second driven shaft 323 and outputs the direction of rotation opposite to a first direction to the second fan 22 through the second driven shaft 323.

The reversing assembly 37 is used for converting the inputted rotational motion into a motion with the opposite direction of rotation and output the motion with the opposite direction of rotation. As shown in FIG. 18, the reversing assembly 37 includes a first gear 371, a second gear 372, and a third gear 373. The first gear 371 is basically parallel to the third gear 373. The second gear 372 is disposed between the first gear 371 and the third gear 373 and is basically perpendicular to the first gear 371. If the first gear 371 rotates in the first direction, when the rotational motion is transmitted to the third gear 373 through the second gear 372, the third gear 373 rotates in a direction opposite to the first direction. In this example, the three gears may be bevel gears or helical gears. The third gear 373 is fixedly connected or coupled to the second driven shaft 323. The reversing assembly 37 is configured as above so that the direction of rotation inputted to the reversing assembly 37 is opposite to the direction of rotation outputted by the reversing assembly 37.

In this example, an end of the drive shaft 322 is a motor coupling portion 3223, the motor coupling portion 3223 extends into the interior of the first motor 31, and the other end of the drive shaft 322 is a first driving portion 3222. An end of the first driven shaft 324 is a first coupling portion 3242, and the other end of the first driven shaft 324 is a second driving portion 3241. The first coupling portion 3242 mates with the first driving portion 3222 in shape. The first gear 371 includes a second coupling portion 3711, and the second driving portion 3241 mates with the second coupling portion 3711 in shape. The second driven shaft 323 includes an opening. The opening allows the second driving portion 3241 to extend from the second fan 22, pass through the second driven shaft 323, and reach the first gear 371 of the reversing assembly 37. The second driving portion 3241 mates with the first gear 371 through a flat portion. The second driving portion 3241 directly drives the first gear 371 to move, and the second driving portion 3241 and the first gear 371 rotate in the same direction. The second driven shaft 323 includes a third driving portion 3231, the second fan 22 includes a third coupling portion 222, and the third coupling portion 222 mates with the third driving portion 3231 in shape. Therefore, after the reversing action of the reversing assembly 37, the rotation in a direction opposite to the direction of rotation of the drive shaft 322 is transmitted to the second fan 22. The first fan 21 mates with the drive shaft 322 in shape, and the first fan 21 and the drive shaft 322 rotate in the same direction. Therefore, the first fan 21 and the second fan 22 rotate in opposite directions.

It is to be noted that the mating between the first driving portion 3222 and the first coupling portion 3242, the mating between the second driving portion 3241 and the second coupling portion 3711, and the mating between the third driving portion 3231 and the third coupling portion 222 may be mating in shape through flat portions, plug-in grooves, or the like or may be fastening through threads or the like. The details are not repeated here.

In addition, a support member 51 is disposed between the first fan 21 and the second fan 22. The support member 51 includes two support rods 511 and a connecting portion 512. Part of the first driving portion 3222 and part of the first coupling portion 3242 both extend into the connecting portion 512. The connecting portion 512 provides a supporting point for the first fan 21 and the second fan 22. The drive shaft 3223 and the two support rods 511 of the first fan 21 are basically arranged on a straight line and pass through the center of the connecting portion 512. The second housing 120 includes grooves 121 and first openings 122 each of which is located in a respective groove 121, and the third housing 130 includes protruding portions 131 and second openings 132 each of which is on a respective protruding portion 131. The support rod 511 extends into the first opening 122 through the groove 121, and the first opening 122 and the second opening 132 together limit the position of the flat portion at the end of the support rod 511.

In this example, the first driving portion 3222 and the motor coupling portion 3223 provide two supporting forces for the first fan 21. A first motor housing 111 is disposed in the first housing 110, a second motor housing 123 is disposed in the second housing 120, and the first motor housing 111 and the second motor housing 123 form an accommodation space for providing support for the first motor 31. A transmission housing 133 is disposed in the third housing 130, and the transmission housing 32 supports a part of the transmission assembly 32, specifically, the reversing assembly 37. Multiple screws of the reversing assembly 37 mate with the threaded holes on the transmission housing 32. In this manner, the fan assembly 2 and the drive assembly 3 are reasonably mounted in the housing 1, thereby maintaining stable transmission.

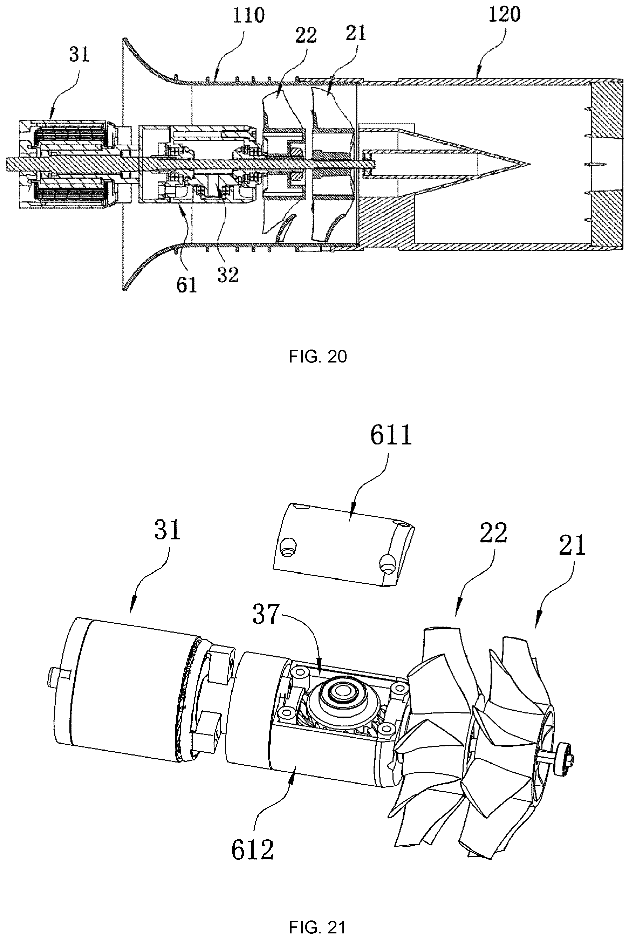

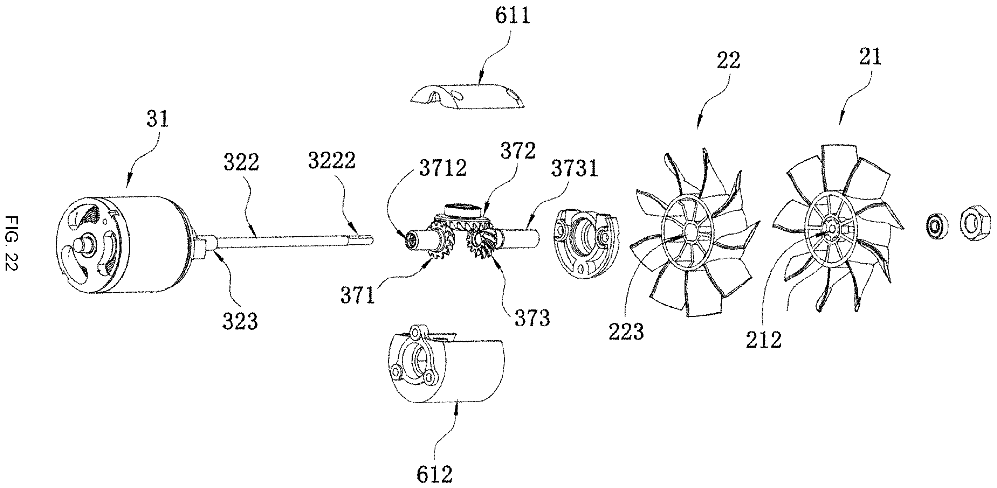

FIGS. 20 to 22 show another example of the present application. The first motor 31 simultaneously drives the first fan 21 and the second fan 22 to rotate. The first motor 31 is connected to the drive shaft 322, and the first motor 31 rotates to directly drive the drive shaft 322 to rotate. The drive assembly 3 in this example also includes the reversing assembly 37. The reversing assembly 37 includes the first gear 371, the second gear 372, and the third gear 373. The working principle of the reversing assembly 37 is similar to that in the preceding example, and the details are not repeated here.

Similar to the preceding example, an end of the drive shaft 322 is the first driving portion 3222. The first fan 21 includes a fourth coupling portion 212. The first driving portion 3222 passes through the first gear 371, the third gear 373, and the second fan 22 and mates with the fourth coupling portion 212 so that the drive shaft 322 rotates to directly drive the first fan 21 to rotate.

Different from the preceding example, the drive shaft 322 is further provided with a fourth driving portion 323, and the fourth coupling portion 3712 is disposed on the first gear 371. The fourth driving portion 323 and the fourth coupling portion 3712 may mate with each other so that the drive shaft 322 rotates to drive the first gear 371 to rotate, the rotation is transmitted to the third gear 373 through the second gear 372, and the third gear 373 outputs rotation in a direction opposite to the direction of rotation of the first gear 371. The third gear 373 is provided with a fifth driving portion 3731, the second fan 22 is provided with a fifth coupling portion 223, and the fifth driving portion 3731 drives the fifth coupling portion 223 to rotate so that the second fan 22 outputs rotation in a direction opposite to the direction of rotation of the drive shaft 322.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A blower, comprising:
a housing (1) formed with an air inlet (11) and an air outlet (12), wherein an airflow flows in from the air inlet (11) and flows out from the air outlet (12); and
a fan assembly (2) comprising at least a first fan (21) and a second fan (22);
wherein in a working mode of the blower, the first fan (21) and the second fan (22) rotate in opposite directions.

2. The blower of claim 1, wherein the first fan (21) and the second fan (22) are both capable of generating the airflow flowing from the air inlet (11) to the air outlet (12).

3. The blower of claim 1, further comprising a first motor (31), wherein the first fan (21) and the second fan (22) are both driven by the first motor (31).

4. The blower of claim 3, wherein the first motor (31) is located on a same side of the first fan (21) and the second fan (22).

5. The blower of claim 3, wherein the first motor (31) is located between the first fan (21) and the second fan (22).

6. The blower of claim 1, further comprising a first motor (31) and a second motor (4), wherein the first fan (21) is driven by the first motor (31), and the second fan (22) is driven by the second motor (4).

7. The blower of claim 6, wherein the first fan (21) and the second fan (22) are located between the first motor (31) and the second motor (4).

8. The blower of claim 6, wherein the first fan (21) and the second fan (22) are located on a side of the first motor (31) and a same side of the second motor (4), respectively.

9. The blower of claim 6, wherein the first fan (21) and the second fan (22) are located on two sides of the first motor (31) and the second motor (4).

10. The blower of any one of claims 1 to 9, wherein a rotational speed of the first fan (21) is a first rotational speed n1, a rotational speed of the second fan (22) is a second rotational speed n2, and a ratio n1/n2 of the first rotational speed n1 to the second rotational speed n2 is greater than or equal to 0.2 and less than or equal to 5.

11. The blower of any one of claims 1 to 9, wherein power of the first fan (21) is first power P1, power of the second fan (22) is second power P2, and a ratio P1/P2 of the first power P1 to the second power P2 is greater than or equal to 0.5 and less than or equal to 2.

12. The blower of claim 1, wherein a chord length of the first fan (21) is a first chord length L1, a chord length of the second fan (22) is a second chord length L2, and a ratio L1/L2 of the first chord length L1 to the second chord length L2 is greater than or equal to 0.65 and less than or equal to 1.

13. The blower of claim 1, wherein an outlet angle of a fan blade of the first fan (21) is basically equal to an inlet angle of a fan blade of the second fan (22).

14. The blower of claim 3, further comprising a drive shaft (322), wherein the drive shaft is driven by the first motor to rotate, and the first fan is driven by the drive shaft to rotate in a direction of rotation the same as a direction of rotation of the drive shaft.

15. The blower of claim 14, further comprising a reversing assembly (37), wherein the drive shaft is connected to the reversing assembly, and the reversing assembly drives the second fan to rotate.

16. The blower of claim 15, wherein the reversing assembly comprises a first gear (371), a second gear (372), and a third gear (373), and the second gear is located between the first gear and the third gear.
